# EUROPÄISCHE PATENTSCHRIFT

(11) **EP 2 301 095 B1**
(45) Veröffentlichungstag und Bekanntmachung des Hinweises auf die Patenterteilung: **13.08.2014**
(21) Anmeldenummer: 09779615.5
(22) Anmeldetag: 03.06.2009
(51) Int. Cl.: H01M 10/42, H01M 2/20, H01R 4/04

(54) **ELEKTRISCHE KONTAKTIERUNG EINES AKKUMULATORS MIT MEHREREN AKKUMULATORZELLEN**
MAKING ELECTRICAL CONTACT WITH A RECHARGEABLE BATTERY HAVING A PLURALITY OF RECHARGEABLE BATTERY CELLS
MISE EN CONTACT ÉLECTRIQUE D UN ACCUMULATEUR DOTÉ DE PLUSIEURS CELLULES D ACCUMULATEUR

(30) Priorität: 11.07.2008 DE 102008040341
(43) Veröffentlichungstag der Anmeldung: 30.03.2011
(73) Patentinhaber: Robert Bosch GmbH, 70442 Stuttgart (DE)
(72) Erfinder: MATTHIAS, Wolf, 70469 Stuttgart (DE); HEINRICH, Thomas, 70771 Leinfelden (DE)
(86) Internationale Anmeldenummer: PCT/EP2009/056780
(87) Internationale Veröffentlichungsnummer: WO 2010/003738

(56) Entgegenhaltungen:
- WO-A1-2007/033689
- WO-A2-2005/039012

## Beschreibung

### Stand der Technik

Die vorliegende Erfindung betrifft einen Akkumulator mit mehreren Akkumulatorzellen, bei dem mindestens eine Akkumulatorzelle über eine elektrische Leitung mit einem dem Akkumulator zugeordneten Elektronikbauteil verbunden ist.

Akkumulatoren bestehen in der Regel aus mehreren, zu Packs oder Modulen zusammen geschalteten Akkumulatorzellen, die über so genannte Zellenverbinder elektrisch leitend miteinander verbunden sind. Hierbei sind die einzelnen Akkumulatorzellen in der Regel mit den Zellenverbindern verschweißt, z.B. durch Elektropunktschweißen. Die Zellenverbinder können über elektrische Leitungen mit Elektronikbauteilen verbunden sein, die den Akkumulatoren zugeordnet sind und beispielsweise bei Li-Ion-Akkumulatoren dazu dienen können, nicht nur den Ladezustand des Akkumulators als Ganzes, sondern vielmehr den Ladezustand jeder einzelnen Akkumulatorzelle separat zu überwachen und ggf. zu steuern.

Aus dem Stand der Technik sind Akkumulatoren bekannt, bei denen die Zellenverbinder bereits vor dem Verschweißen mit den Akkumulatorzellen mit derartigen elektrischen Leitungen verbunden werden, z.B. durch Lötung, sodass ein entsprechender Kabelbaum vor dem Verschweißen vorgefertigt werden kann. Auch sind Akkumulatoren bekannt, bei denen derartige elektrische Leitungen erst nach dem Verschweißen der Zellenverbinder mit den Akkumulatorzellen mit den Zellenverbindern verbunden werden, z.B. durch Lötung oder mittels geeigneter Steckverbinder.

Nachteilig am Stand der Technik ist, dass die vorgefertigten Kabelbäume schwierig und umständlich zu handhaben sind, da die am Zellenverbinder befestigten elektrischen Leitungen während des Schweißprozesses stören können. Darüber hinaus besteht das Risiko, dass nach dem Verschweißen eines oder mehrerer Zellenverbinder eine ungewünschte Kontaktierung eines oder mehrerer anderer Zellenverbinder mit einer oder mehreren Akkumulatorzellen zu einem Kurzschluss einzelner Akkumulatorzellen führt. Bei einer Lötung nach dem Verschweißen besteht das Problem, dass durch Einbringen einer zu großen Wärmemenge während des Lötprozesses eine unbeabsichtigte Schädigung der Akkumulatorzellen auftreten kann, da insbesondere Li-Ion-Zellen sehr wärmeempfindlich sind. Bei Steckverbindern besteht wiederum das Problem, dass diese als Präzisionsteil aufwändig und kostenintensiv herzustellen sind und verhältnismäßig viel Platz zur Kontaktierung erfordern. Darüber hinaus besteht bei Steckverbindern das Problem, dass Verschmutzung oder Korrosion zu einer unzureichenden Kontaktierung der elektrischen Leitung und somit zu einer schlechten elektrischen Verbindung mit dem zugeordneten Elektronikbauteil führen können.

In WO 2005/039012 A2 ist eine flexible Leiterplatte zur Verschaltung von Akkuzellen in einem Akkupack beschrieben, wobei die flexible Leiterplatte ein aus flexiblem Material ausgebildetes Substrat aufweist, auf dem Leiterbahnen mit Anschlussfeldern nach Art von Lötpads vorgesehen sind. An den Lötpads werden Anschlussenden von Verbindungsgliedern verlötet, die zur Verbindung von benachbarten Akkuzellen ausgebildet sind. Ferner ist eine flexible Leiterplatte beschrieben, deren Leiterbahnen unmittelbar bzw. direkt mit den Akkuzellen eines Akkupacks verbunden werden. Hierbei werden Anschlussabschnitte von Leiterbahnen der flexiblen Leiterplatte unter Verwendung eines elektrisch leitfähigen Klebstoffs mit Kontaktflächen der Akkuzellen verklebt.

Aus WO 2007/033689 A1 ist ein Akkupack mit einer Elektronikeinheit mit einer Leiterplatte bekannt, bei dem die Leiterbleche, die zur elektrischen Verbindung der in Reihe geschalteten Akkuzellen vorgesehen sind, unmittelbar mit der Leiterplatte verbunden sind.

### Offenbarung der Erfindung

Eine Aufgabe der Erfindung ist es daher, einen neuen Akkumulator mit mehreren Akkumulatorzellen bereit zu stellen, bei dem eine sichere und stabile Verbindung von mindestens einer Akkumulatorzelle mit einem dem Akkumulator zugeordneten Elektronikbauteil über eine elektrische Leitung ermöglicht wird, wobei die oben beschriebenen Nachteile des Standes der Technik vermieden werden.

Dieses Problem wird gelöst durch einen Akkumulator mit mehreren Akkumulatorzellen und einem Elektronikbauteil, wobei mindestens eine Akkumulatorzelle über eine elektrische Leitung mit dem Elektronikbauteil verbunden ist und mindestens zwei Akkumulatorzellen über einen Zeitenverbinder elektrisch leitend miteinander verbunden sind. Die elektrische Leitung weist mindestens ein Kontaktelement auf. Der Zellenverbinder ist zwischen der mindestens einen Akkumulatorzelle und dem Kontaktelement angeordnet. Das Kontaktelement ist über den elektrisch leitfähigen Klebstoff mit dem Zellenverbinder elektrisch leitend verbunden.

Die Erfindung ermöglicht somit eine sichere, stabile, kostengünstige und Platz sparende Verbindung zwischen Kontaktelement und Akkumulatorzelle durch den elektrisch leitfähigen Klebstoff. Durch den elektrisch leitfähigen Klebstoff kann eine sichere, stabile, kostengünstige und Platz sparende Verbindung zwischen Kontaktelement und Zellenverbinder hergestellt werden.

Die elektrische Leitung und das Kontaktelement sind bevorzugt auf einem Trägerelement angeordnet. Das Trägerelement ist vorzugsweise eine Trägerfolie, die zur Fixierung am Akkumulator an mindestens zwei der mehreren Akkumulatorzellen befestigbar ist, wobei die elektrische Leitung als eine flexible Leiterbahn auf der Trägerfolie ausgebildet ist. Die flexible Leiterbahn kann das Elektronikbauteil zumindest teilweise implementieren.

Die Erfindung ermöglicht somit eine Vorkonfektionierung einer geeigneten Trägerfolie, die schnell und einfach am Akkumulator befestigt werden kann, wobei stabile und sichere elektrisch leitende Verbindungen zwischen Kontaktelement und Akkumulatorzellen bzw. Zellenverbindern durch den elektrisch leitfähigen Klebstoff hergestellt werden können. Hierbei kann durch eine entsprechende Ausgestaltung der Trägerfolie die Montage vereinfacht und eine falsche Kontaktierung verhindert werden.

Gemäß einer Ausführungsform ist das Kontaktelement auf einem Befestigungselement angeordnet, das zur Fixierung am Akkumulator an mindestens zwei der mehreren Akkumulatorzellen befestigbar ist.

Somit kann mit einfachen Mitteln eine falsche Kontaktierung bei der Montage der elektrischen Leitungen am Akkumulator verhindert werden.

Das Eingangs genannte Problem wird darüber hinaus gelöst durch eine Elektrowerkzeugmaschine mit einem erfindungsgemäßen Akkumulator.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
Fig. 1 eine perspektivische Darstellung einer Elektrowerkzeugmaschine mit einem Akkumulator gemäß der Erfindung,
Fig. 2 eine perspektivische Ansicht des Akkumulators von Fig. 1 mit einem Kontaktelement gemäß einer Ausführungsform,
Fig. 3 eine perspektivische Darstellung eines Trägerelements gemäß einer Ausführungsform,
Fig. 4 eine perspektivische Ansicht des Akkumulators von Fig. 1 mit dem Trägerelement von Fig. 3,
Fig. 5 eine perspektivische Darstellung eines Kabelbaums gemäß einer Ausführungsform, und
Fig. 6 eine perspektivische Ansicht des Akkumulators von Fig. 1 mit dem Kabelbaum von Fig. 5.

### Beschreibung der Ausführungsbeispiele

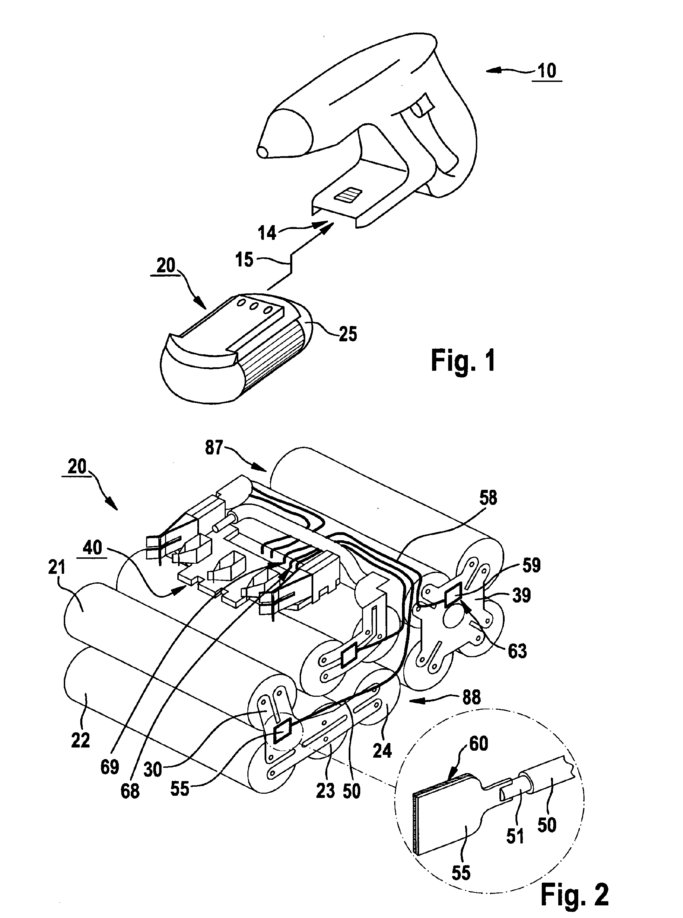

Fig. 1 zeigt eine Elektrowerkzeugmaschine 10 und einen Akkumulator 20 mit einem Akkumulatorgehäuse 25. Die Elektrowerkzeugmaschine 10 ist zur netzunabhängigen Stromversorgung über eine Schnittstelle 14 mechanisch und elektrisch mit dem Akkumulator 20 verbindbar. Hierzu wird der Akkumulator 20 vor einer Inbetriebnahme der Elektrowerkzeugmaschine 10 in Richtung eines Pfeils 15 in die Schnittstelle 14 eingeschoben und dort verrastet, wobei automatisch eine elektrische Verbindung zwischen dem Akkumulator 20 und der Elektrowerkzeugmaschine 10 hergestellt wird.

In Fig. 1 ist die Elektrowerkzeugmaschine 10 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Akku-betriebenen Elektrowerkzeugmaschinen Anwendung finden kann, z.B. bei einem Bohrhammer, einem Winkelschleifer, einem Rasenmäher etc.

Fig. 2 zeigt den Akkumulator 20 von Fig. 1, der zur Verdeutlichung einer ersten Ausführungsform ohne das Akkumulatorgehäuse 25 dargestellt ist. Der Akkumulator 20 weist beispielhaft zehn Akkumulatorzellen mit Zellköpfen 88 und gegenüberliegenden Zellköpfen 87 auf, von denen zwecks Klarheit und Übersichtlichkeit der Darstellung nur die Akkumulatorzellen 21, 22, 23, 24 gekennzeichnet sind. Diese sind an ihren Zellköpfen 88 über einen Zellenverbinder 30 elektrisch leitend miteinander verbunden.

Der Zellenverbinder 30 ist über eine elektrische Leitung 50 mit einem dem Akkumulator 20 zugeordneten Elektronikbauteil 40 verbunden, das z.B. eine Schutzbeschaltung für den Akkumulator 20 und/oder Anschlusselemente zur Kontaktierung der Elektrowerkzeugmaschine 10 von Fig. 1 aufweist. Hierzu ist ein Ende 68 der Leitung 50 am Elektronikbauteil 40 angeschlossen. An deren anderem Ende 51 ist ein Kontaktelement 55 vorgesehen, z.B. ein Metallplättchen, das über einen elektrisch leitfähigen Klebstoff 60 mit dem Zellenverbinder 30 elektrisch leitend verbunden ist. Es wird jedoch darauf hingewiesen, dass das Kontaktelement 55 auch unmittelbar auf einen der Zellköpfe 88 der Akkumulatorzellen 21, 22, 23, 24 aufgeklebt werden kann, was jedoch außerhalb der beanspruchten Erfindung liegt.

Gemäß einer Ausführungsform ist das Kontaktelement 55 selbstklebend mit dem elektrisch leitfähigen Klebstoff 60 beschichtet. Der Klebstoff 60 weist bevorzugt Kunstharz, z.B. licht-aktivierbares Epoxydharz und/oder 2K-Epoxydharz (2-Komponenten-Epoxydharz), auf. Das Kunstharz ist mit mindestens einem elektrisch leitfähigen Bestandteil versetzt. Vorzugsweise ist das Kunstharz mit einem Anteil an Silberpulver versetzt, der ausreichend hoch ist, damit der Klebstoff 60 eine elektrische Leitfähigkeit aufweist, die etwa der Leitfähigkeit eines gut leitenden Metalls, z.B. Kupfer, entspricht.

Um die Akkumulatorzellen des Akkumulators 20 anwendungsspezifisch zu einem Pack oder Modul zusammenzuschalten, sind wie aus Fig. 2 ersichtlich auch andere Zellen über entsprechende Zellenverbinder an ihren Zellköpfen 87 bzw. 88 elektrisch leitend miteinander verbunden, wie beispielhaft mit einem Zellenverbinder 39 angedeutet ist. Dieser ist über einen elektrisch leitfähigen Klebstoff 63 elektrisch leitend mit einem Kontaktelement 59 verbunden, das an einem Ende einer elektrischen Leitung 58 befestigt ist, die an ihrem anderen Ende 69 mit dem Elektronikbauteil 40 verbunden ist.

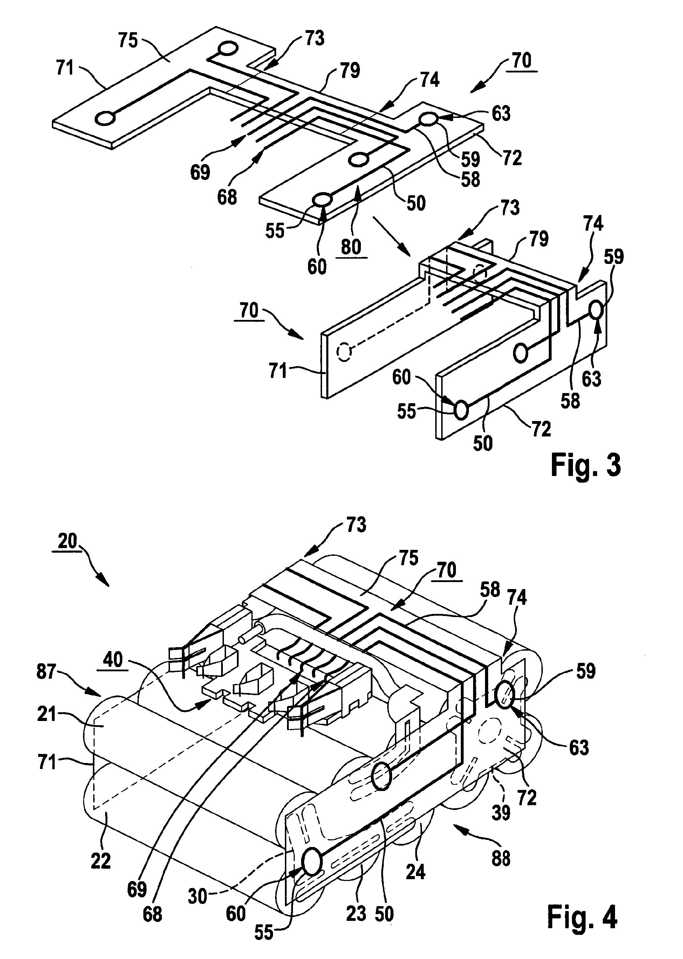

Fig. 3 zeigt ein Trägerelement 70, auf dem beispielhaft die Leitungen 50, 58 mit den zugeordneten Kontaktelementen 55 bzw. 59 ausgebildet sind. Das Trägerelement 70 ist bevorzugt eine vorkonfektionierte Trägerfolie 75, auf der die Leitungen 50, 58 und Kontaktelemente 55, 59 als flexible Leiterbahn 80 ausgebildet sind. Gemäß einer Ausführungsform implementiert die flexible Leiterbahn 80 auch das Elektronikbauteil 40 zumindest teilweise. In Fig. 3 ist jedoch ein Ausführungsbeispiel der Trägerfolie 75 gezeigt, in dem die Enden 68, 69 der Leitungen 50 bzw. 58 von der Trägerfolie 75 zur Kontaktierung eines separat ausgebildeten Elektronikbauteils 40 abstehen, wie bei Fig. 4 beschrieben.

Wie aus Fig. 3 ersichtlich, weist die Trägerfolie 75 beispielhaft ein Mittenteil 79 und zwei Seitenteile 71, 72 auf, die an zugeordneten Faltlinien 73, 74 zur Montage auf den Akkumulatorzellen 21, 22, 23, 24 aufeinander zu geklappt werden können. Zur Fixierung am Akkumulator 20 sind zumindest die Seitenteile 71, 72 jeweils an mindestens zwei der Akkumulatorzellen 21, 22, 23, 24 befestigbar, vorzugsweise an deren Zellköpfen 87 bzw. 88, z.B. mittels einer nicht elektrisch leitenden Klebverbindung. Alternativ hierzu können auch lediglich die Kontaktelemente 55, 59 wie oben beschrieben selbstklebend ausgebildet sein.

Fig. 4 zeigt den zur Verdeutlichung einer zweiten Ausführungsform ohne das Akkumulatorgehäuse 25 dargestellten Akkumulator 20 von Fig. 1, an dem das als Trägerfolie 75 ausgebildete Trägerelement 70 von Fig. 3 befestigt ist. Hierzu sind dessen Seitenteile 71, 72 bevorzugt über geeignete Klebverbindungen auf die Zellköpfe 87 bzw. 88 aufgeklebt. Hierbei kontaktieren die Kontaktelemente 55, 59 die Zellenverbinder 30, 39 elektrisch leitend über die an diesen vorgesehenen elektrisch leitfähigen Klebstoffe 60 bzw. 63 und die Enden 68, 69 der Leitungen 50, 58 sind im Bereich des Elektronikbauteils 40 angeordnet und können somit elektrisch leitend mit diesem verbunden werden.

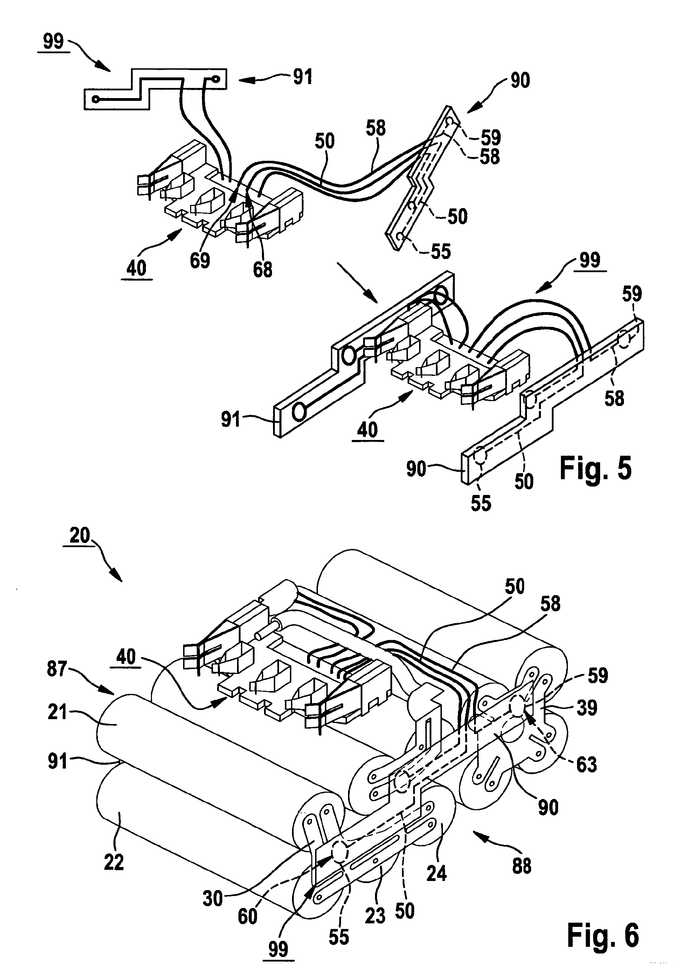

Fig. 5 zeigt einen Kabelbaum 99 mit zwei Befestigungselementen 90, 91, auf denen zumindest die Kontaktelemente der elektrischen Leitungen von Fig. 1 befestigt sind. Z.B. sind auf dem Befestigungselement 90 die Kontaktelemente 55, 59 der elektrischen Leitungen 50 bzw. 58 befestigt, deren Enden 68 bzw. 69 mit dem Elektronikbauteil 40 elektrisch leitend verbunden sind. Die elektrischen Leitungen 50, 58 sind zumindest abschnittsweise auf dem Befestigungselement 90 angeordnet, bevorzugt die entlang des Befestigungselements 90 verlaufenden Abschnitte der Leitungen 50 bzw. 58, wie in Fig. 6 gezeigt.

Zur Fixierung am Akkumulator 20 sind die Befestigungselemente 90, 91 jeweils an mindestens zwei der Akkumulatorzellen 21, 22, 23, 24 befestigbar. Hierzu können die Befestigungselemente 90, 91 beispielsweise auf die Zellköpfe 87, 88 von mindestens zwei der Akkumulatorzellen 21, 22, 23, 24 aufgeklebt werden, z.B. mittels einer nicht elektrisch leitenden Klebverbindung. Alternativ hierzu können auch lediglich die Kontaktelemente 55, 59 wie oben beschrieben selbstklebend ausgebildet sein.

Fig. 6 zeigt den zur Verdeutlichung einer dritten Ausführungsform ohne das Akkumulatorgehäuse 25 dargestellten Akkumulator 20 von Fig. 1, an dem der Kabelbaum 99 von Fig. 5 befestigt ist. Hierzu sind dessen Befestigungselemente 90, 91 bevorzugt über geeignete Klebverbindungen auf die Zellköpfe 88 bzw. 87 aufgeklebt. Hierbei kontaktieren die Kontaktelemente 55, 59 die Zellenverbinder 30, 39 elektrisch leitend, wie bei Fig. 2 und 4 beschrieben.

## Patentansprüche

1. Akkumulator (20) mit mehreren Akkumulatorzellen (21, 22, 23, 24) und einem Elektronikbauteil (40), wobei mindestens eine Akkumulatorzelle (21) über eine elektrische Leitung (50) mit dem Elektronikbauteil (40) verbunden ist, **dadurch gekennzeichnet, dass** mindestens zwei Akkumulatorzellen (21, 22) über einen Zellenverbinder (30) elektrisch leitend miteinander verbunden sind und die elektrische Leitung (50) mindestens ein Kontaktelement (55) aufweist, wobei der Zellenverbinder (30) zwischen der mindestens einen Akkumulatorzelle (21) und dem Kontaktelement (55) angeordnet ist und das Kontaktelement (55) über einen elektrisch leitfähigen Klebstoff (60) mit dem Zellenverbinder (30) elektrisch leitend verbunden ist.

2. Akkumulator nach Anspruch 1, **dadurch gekennzeichnet, dass** die elektrische Leitung (50) und das Kontaktelement (55) auf einem Trägerelement (70) angeordnet sind.

3. Akkumulator nach Anspruch 2, **dadurch gekennzeichnet, dass** das Trägerelement (70) eine Trägerfolie (75) ist, die zur Fixierung am Akkumulator (20) an mindestens zwei der mehreren Akkumulatorzellen (21, 22, 23, 24) befestigbar ist, wobei die elektrische Leitung (50) als eine flexible Leiterbahn (80) auf der Trägerfolie (75) ausgebildet ist.

4. Akkumulator nach Anspruch 3, **dadurch gekennzeichnet, dass** die flexible Leiterbahn (80) das Elektronikbauteil (40) zumindest teilweise implementiert.

5. Akkumulator nach Anspruch 1, **dadurch gekennzeichnet, dass** das Kontaktelement (55) auf einem Befestigungselement (90) angeordnet ist, das zur Fixierung am Akkumulator (20) an mindestens zwei der mehreren Akkumulatorzellen (21, 22, 23, 24) befestigbar ist.

6. Akkumulator nach Anspruch 5, **dadurch gekennzeichnet, dass** die elektrische Leitung (50) zumindest abschnittsweise auf dem Befestigungselement (90) angeordnet ist.

7. Elektrowerkzeugmaschine (10) mit einem Akkumulator (20) nach einem der vorhergehenden Ansprüche.

## Claims

1. Rechargeable battery (20) having a plurality of rechargeable battery cells (21, 22, 23, 24) and an electronics component (40), wherein at least one rechargeable battery cell (21) is connected to the electronics component (40) by means of an electrical line (50), **characterized in that** at least two rechargeable battery cells (21, 22) are electrically conductively connected to one another by means of a cell connector (30), and the electrical line (50) has at least one contact element (55), wherein the cell connector (30) is arranged between the at least one rechargeable battery cell (21) and the contact element (55), and the contact element (55) is electrically conductively connected to the cell connector (30) by means of an electrically conductive adhesive (60).

2. Rechargeable battery according to Claim 1, **characterized in that** the electrical line (50) and the contact element (55) are arranged on a carrier element (70).

3. Rechargeable battery according to Claim 2, **characterized in that** the carrier element (70) is a carrier film or foil (75) which can be fastened to at least two of the plurality of rechargeable battery cells (21, 22, 23, 24) in order to be fixed on the rechargeable battery (20), wherein the electrical line (50) is formed on the carrier film or foil (75) as a flexible conductor track (80).

4. Rechargeable battery according to Claim 3, **characterized in that** the flexible conductor track (80) at least partially implements the electronics component (40).

5. Rechargeable battery according to Claim 1, **characterized in that** the contact element (55) is arranged on a fastening element (90) which can be fastened to at least two of the plurality of rechargeable battery cells (21, 22, 23, 24) in order to be fixed to the rechargeable battery (20).

6. Rechargeable battery according to Claim 5, **characterized in that** the electrical line (50) is arranged on the fastening element (90) at least in sections.

7. Electric machine tool (10) having a rechargeable battery (20) according to one of the preceding claims.

## Revendications

1. Accumulateur (20) comprenant plusieurs cellules d'accumulateur (21, 22, 23, 24) et un composant électronique (40), au moins une cellule d'accumulateur (21) étant connectée par le biais d'une conduite électrique (50) au composant électronique (40), **caractérisé en ce qu'**au moins deux cellules d'accumulateur (21, 22) sont connectées l'une à l'autre de manière électriquement conductrice par le biais d'un connecteur de cellules (30) et la conduite électrique (50) présente au moins un élément de contact (55), le connecteur de cellules (30) étant disposé entre l'au moins une cellule d'accumulateur (21) et l'élément de contact (55) et l'élément de contact (55) étant connecté de manière électriquement conductrice au connecteur de cellules (30) par le biais d'un adhésif électriquement conducteur (60).

2. Accumulateur selon la revendication 1, **caractérisé en ce que** la conduite électrique (50) et l'élément de contact (55) sont disposés sur un élément de support (70).

3. Accumulateur selon la revendication 2, **caractérisé en ce que** l'élément de support (70) est une feuille de support (75) qui peut être fixée à au moins deux des plusieurs cellules d'accumulateur (21, 22, 23, 24) pour la fixation à l'accumulateur (20), la conduite électrique (50) étant réalisée sous forme de piste conductrice flexible (80) sur la feuille de support (75).

4. Accumulateur selon la revendication 3, **caractérisé en ce que** la piste conductrice flexible (80) constitue au moins en partie le composant électronique (40).

5. Accumulateur selon la revendication 1, **caractérisé en ce que** l'élément de contact (55) est disposé sur un élément de fixation (90) qui peut être fixé à au moins deux des plusieurs cellules d'accumulateur (21, 22, 23, 24) pour la fixation à l'accumulateur (20).

6. Accumulateur selon la revendication 5, **caractérisé en ce que** la conduite électrique (50) est disposée au moins en partie sur l'élément de fixation (90).

7. Machine-outil électrique (10) comprenant un accumulateur (20) selon l'une quelconque des revendications précédentes.
